# EUROPÄISCHE PATENTSCHRIFT

(11) **EP 3 496 978 B1**
(45) Veröffentlichungstag und Bekanntmachung des Hinweises auf die Patenterteilung: **11.03.2020**
(21) Anmeldenummer: 17732138.7
(22) Anmeldetag: 23.06.2017
(51) Int. Cl.: B60R 25/24

(54) **STEUERVORRICHTUNG UND VERFAHREN ZUM ENTRIEGELN EINES KRAFTFAHRZEUGS MIT INTEGRIERTEM NFC-STEUERGERÄT**
CONTROL SYSTEM AND METHOD FOR UNLOCKING A MOTOR VEHICLE WITH INTEGRATED NFC-READER
DISPOSITIF DE COMMANDE ET PROCÉDÉ POUR DÉVERROUILLER UN VÉHICULE À MOTEUR AVEC LECTEUR NFC INTÉGRÉ

(30) Priorität: 08.08.2016 DE 102016214674
(43) Veröffentlichungstag der Anmeldung: 19.06.2019
(73) Patentinhaber: Audi AG, 85045 Ingolstadt (DE)
(72) Erfinder: WISBAUER, Johannes, 85080 Gaimersheim (DE)
(74) Vertreter: Reichert, Thomas Klaus
(86) Internationale Anmeldenummer: PCT/EP2017/065554
(87) Internationale Veröffentlichungsnummer: WO 2018/028866

(56) Entgegenhaltungen:
- EP-A1- 2 381 392
- EP-A1- 2 860 071
- DE-A1-102014 107 186
- US-A1- 2014 172 192
- US-A1- 2014 242 971
- US-B1- 9 162 648

## Beschreibung

Die Erfindung betrifft ein Verfahren zum Betreiben eines Kraftfahrzeugs und eine Steuervorrichtung zum Betreiben eines Kraftfahrzeugs. Des Weiteren betrifft die Erfindung ein Kraftfahrzeug mit einer derartigen Steuervorrichtung.

Zum Fahrzeugzugang, also zum Aufschließen eines Fahrzeugs, wird üblicherweise ein Funkschlüssel mit oder ohne Keyless Entry-Funktion oder ein Notschlüssel, welcher noch einen herkömmlichen Schlüsselbart aufweist, verwendet. Das Entriegeln bzw. Verriegeln einer Fahrzeugtür wird dabei jeweils durch eine bewusste Aktion eines Benutzers ausgelöst. Bei einem Funkschlüssel ohne Keyless Entry-Funktion drückt der Benutzer entweder auf eine Entriegelungstaste oder auf eine Verriegelungstaste, um das betreffende Kraftfahrzeug zu entriegeln bzw. zu verriegeln. Wird ein Funkschlüssel mit der sogenannten Keyless Entry-Funktion verwendet, ist es ausreichend, dass der Benutzer den Funkschlüssel mit sich führt und eine üblicherweise im Bereich einer Innenseite eines Türgriffs angeordnete Sensorfläche berührt, um das Kraftfahrzeug zu entriegeln. Möchte er das Kraftfahrzeug wiederum verriegeln, reicht es bei mitgeführtem Funkschlüssel mit Keyless Entry-Funktion üblicherweise aus, eine auf einer Türgriff-Außen- oder Oberseite angeordnete Sensorfläche zu berühren.

Die DE 10 2010 061 111 A1 zeigt ein Verfahren, bei welchem ein Bediener mittels eines mobilen Kommunikationsendgeräts ein Kraftfahrzeugschließsystem betätigen kann, um beispielsweise eine Tür eines Kraftfahrzeugs zu entriegeln oder zu verriegeln. Dafür ist es lediglich erforderlich, dass der Benutzer am mobilen Kommunikationsgerät eine bestimmte Tastenkombination betätigt oder ein auf einem Bildschirm des Kommunikationsgeräts angezeigtes Element auswählt. Der Nutzer muss also aktiv am mobilen Kommunikationsgerät eine Aktion tätigen, um ein Kraftfahrzeug zu entriegeln oder zu verriegeln.

Die DE 10 2012 107 000 A1 zeigt ein Verfahren, bei welchem ein Benutzer mittels seines Smartphones ein Kraftfahrzeug entriegeln kann. Dabei wird eine NFC-Verbindung zwischen dem Smartphone und einem ID-Gebermodul hergestellt, in Folge dessen das Smartphone einen Authentifizierungscode erhält. Die eigentliche Entriegelung des Kraftfahrzeugs erfolgt dabei über eine zwischen dem Fahrzeug und dem Smartphone hergestellte Mobilfunkverbindung. Dadurch ist es möglich, das Kraftfahrzeug auch über sehr große Entfernungen zu entriegeln oder zu verriegeln.

Die DE 10 2014 107 186 A1 zeigt eine Moduleinheit mit einer Schnittstelle für ein Kommunikationsgerät, wie beispielsweise ein Smartphone. Bei der Moduleinheit handelt es sich also um eine Art Adapter, welcher am Kommunikationsgerät angebracht werden kann. Sobald die Moduleinheit an ein fahrzeugseitiges Kommunikationsmodul gehalten wird, empfängt es ein Wecksignal von einem Sicherheitssystem des Fahrzeugs. Das Wecksignal wird von der Moduleinheit an das Kommunikationsgerät übertragen, welches daraufhin ein Antwortsignal an das Sicherheitssystem des Kraftfahrzeugs überträgt. Das Aussenden des Wecksignals kann beispielsweise durch eine festgestellte Annäherung eines Bedieners an das Fahrzeug mit Hilfe eines Näherungssensors, der in einem Türaußengriff angeordnet ist, initiiert werden. Die US20140242971A offenbart ein Verfahren nach dem Oberbegriff des Anspruchs 1.

Es ist die Aufgabe der vorliegenden Erfindung, eine technische Lösung bereitzustellen, mittels welcher auf besonders einfache Weise schlüssellos ein Kraftfahrzeug betrieben werden kann.

Diese Aufgabe wird durch ein Verfahren zum Betreiben eines Kraftfahrzeugs sowie durch eine Steuervorrichtung zum Betreiben eines Kraftfahrzeugs mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Kraftfahrzeugs wird ein Verriegelungszustand eines Schließsystems des Kraftfahrzeugs verändert, sobald erfasst wird, dass ein mobiles Endgerät, welches einen NFC-Chip und in einer Speichereinrichtung einen vorgegebenen Code aufweist, in einem Sende- und Empfangsbereich eines im Kraftfahrzeug integrierten NFC-Steuergeräts angeordnet wird. Das NFC-Steuergerät kann z.B. im Bereich eines äußeren Türgriffs des Kraftfahrzeugs integriert sein. Es muss nicht unbedingt der Türgriff sein. Das als NFC Reader dienende NCF-Steuergeräte könnte auch in die B-Säule oder in die Windschutzscheibe integriert werden.

Bei dem mobilen Endgerät kann es sich beispielsweise um ein Smartphone, ein herkömmliches Handy, um eine Smartwatch oder auch um eine Smartcard handeln. Generell ist jedes Endgerät geeignet, das NFC-fähig ist und eine sichere Speicher- und Ausführungsumgebung, ein sogenanntes Secure Element, mit sich bringt. Ein Fitnessarmband z.B. würde sich auch eignen. Handelt es sich bei dem mobilen Endgerät beispielsweise um ein Smartphone, bringt das erfindungsgemäße Verfahren den Vorteil mit sich, dass das ohnehin üblicherweise immer mitgeführte Smartphone zum Betreiben des Kraftfahrzeugs verwendet werden kann, insbesondere um dieses zu entriegeln oder zu verriegeln. Ein Benutzer braucht also keinen Fahrzeugschlüssel mehr mit sich zu führen, um das Schließsystem des Kraftfahrzeugs zu betätigen. Stattdessen ist es vollkommen ausreichend, wenn der Benutzer das besagte mobile Endgerät mit sich führt und dieses im Sende- und Empfangsbereich des beispielsweise im Bereich des äußeren Türgriffs des Kraftfahrzeugs integrierten NFC-Steuergeräts anordnet.

Sobald dies erfolgt ist, wird eine NFC-Verbindung zwischen dem mobilen Endgerät, genauer zwischen dem im mobilen Endgerät integrierten NFC-Chip, und dem NFC-Steuergerät hergestellt. Der NFC-Chip und das NFC-Steuergerät führen dann eine Authentifizierung durch, wobei vorzugsweise der in der Speichereinrichtung des mobilen Endgeräts gespeicherte Code ausgetauscht wird. Prinzipiell wird beim Fahrzeugzugang vorzugsweise aber erstmal kein Code ausgetauscht. Es handelt sich hier um eine Challenge-Response Authentifizierung auf Basis eines gemeinsamen Geheimnisses oder Codes mit symmetrischer Verschlüsselung. Hier wäre aber auch ein asymmetrisches Verschlüsselungsverfahren denkbar. Beim Fahrzeugstart wird ein weiterer bzw. anderer Code in verschlüsselter Form übertragen

Bei dieser Speichereinrichtung handelt es sich um ein sogenanntes Secure-Element, eine manipulationssichere Plattform zur Speicherung von Daten. Sobald anhand des ausgetauschten Codes die Berechtigung des betreffenden Benutzers festgestellt worden ist, wird der Verriegelungszustand des Schließsystems des Kraftfahrzeugs verändert. Das heißt, dass das Schließsystem des Kraftfahrzeugs entweder verriegelt oder entriegelt wird, je nachdem ob es gerade verriegelt oder entriegelt ist. Wenn der Benutzer also sein NFC-fähiges Endgerät in Form des mobilen Endgeräts an den Türgriff des Kraftfahrzeugs hält und das Fahrzeug verriegelt ist, wird das Fahrzeug entriegelt und umgekehrt. Mittels der erfindungsgemäßen Lösung wird also eine besonders einfache Möglichkeit bereitgestellt, ein Schließsystem eines Kraftfahrzeugs mittels eines mobilen Endgeräts zu betätigen.

Eine vorteilhafte Ausführungsform der Erfindung sieht vor, dass ein Zustand von zumindest einer weiteren Funktionseinheit des Kraftfahrzeugs entsprechend einer im mobilen Endgerät vorkonfigurierten Auswahl verändert wird, sobald erfasst wird, dass das mobile Endgerät in dem Sende- und Empfangsbereich des NFC-Steuergeräts, also des im Bereich des äußeren Türgriffs des Kraftfahrzeugs integrierten NFC-Steuergeräts, angeordnet wird. Es besteht also die Möglichkeit, dass der Benutzer beispielsweise mittels einer auf dem mobilen Endgerät installierten App vorkonfigurieren kann, wie sich das Kraftfahrzeug verhalten soll, sobald erfasst wird, dass das mobile Endgerät in dem Sende- und Empfangsbereich des NFC-Steuergeräts, welches im Bereich des äußeren Türgriffs des Kraftfahrzeugs integriert ist, angeordnet worden ist. Über das mobile Endgerät kann also beispielsweise bestimmt werden, dass ein Kofferraum geöffnet oder geschlossen werden soll, sobald sich das mobile Endgerät im Sende- und Empfangsbereich des NFC-Steuergeräts befindet. Genauso gut ist es möglich, dass beispielsweise schon ein Navigationssystem des Kraftfahrzeugs hochgefahren, also gestartet, wird, sobald sich das mobile Endgerät im Sende- und Empfangsbereich des NFC-Steuergeräts befindet. Ein Benutzer kann im Wesentlichen beliebige Funktionseinheiten des Kraftfahrzeugs auswählen und ihre Verhaltensweise konfigurieren, welche sie an den Tag legen sollen, sobald erfasst worden ist, dass das mobile Endgerät in dem Sende- und Empfangsbereich des im Bereich des äußeren Türgriffs des Kraftfahrzeugs integrierten NFC-Steuergeräts angeordnet worden ist. Beispielsweise können auch Spiegeleinstellungen, Sitzeinstellungen und dergleichen vorkonfiguriert werden. Dies ist insbesondere dann von Vorteil, wenn verschiedene Personen ein und dasselbe Kraftfahrzeug nutzen und sie jeweils über ein eigenes mobiles Endgerät verfügen, welches dazu ausgelegt ist, in der beschriebenen Weise mit dem Kraftfahrzeug zu kommunizieren, um diese zu steuern.

Eine weitere vorteilhafte Ausführungsform der Erfindung sieht vor, dass sobald das mobile Endgerät in einem Sende- und Empfangsbereich eines im Fahrzeuginnenraum des Kraftfahrzeugs integrierten weiteren NFC-Steuergeräts angeordnet wird, eine Zündung des Kraftfahrzeugs aktiviert wird. Mit anderen Worten kann es also vorgesehen sein, dass der sogenannte Klemme-15-An-Zustand hervorgerufen wird, sobald erfasst wird, dass das mobile Endgerät im Fahrzeuginnenraum im Sende- und Empfangsbereich des weiteren NFC-Steuergeräts angeordnet worden ist. Häufig vergeht nach dem Einsteigen in ein Kraftfahrzeug noch etwas Zeit bis der Fahrer den Motor des Kraftfahrzeugs startet, beispielsweise weil er sich zunächst anschnallt, mitgeführte Sachen verstaut und dergleichen. Wenn aber in der Zwischenzeit schon die Zündung des Kraftfahrzeugs aktiviert wird, kann beispielsweise ein Navigationssystem schon frühzeitig hochgefahren werden, sodass es möglichst dann schon zur Verfügung steht, wenn der Fahrer ein Ziel eingeben möchte. Gleiches kann auch für beliebige weitere Systeme des Kraftfahrzeugs gelten.

Bei der Erfindung ist es vorgesehen, dass sobald das mobile Endgerät in dem Sende- und Empfangsbereich des weiteren NFC-Steuergeräts angeordnet wird, eine elektrische Antriebsmaschine des Kraftfahrzeugs aktiviert wird. Mit anderen Worten wird also ein zum Antreiben des Kraftfahrzeugs dienender Elektromotor aktiviert, sobald sich das mobile Endgerät in dem Sende- und Empfangsbereich des weiteren NFC-Steuergeräts befindet. Ein Fahrer muss also beispielsweise keinen StartKnopf mehr betätigen, stattdessen ist es vollkommen ausreichend, dass sich das mobile Endgerät im Sende- und Empfangsbereich des weiteren NFC-Steuergeräts befindet. Das Kraftfahrzeug ist dabei derart eingerichtet, dass trotz aktivierter elektrischer Antriebsmaschine das Kraftfahrzeug nicht von selbst losfährt. Es ist auch möglich, dass durch Anordnen des Smartphones im Sende- und Empfangsbereich des weiteren NFC-Steuergeräts eine Startfreigabe erteilt wird, wobei z.B. erst beim Einlegen eines Ganges oder Betätigung eines Gaspedals der Motor, also die elektrische Antriebsmaschine des Kraftfahrzeugs, gestartet wird

Eine weitere vorteilhafte Ausführungsform der Erfindung sieht vor, dass die Zündung des Kraftfahrzeugs aktiviert und/oder die elektrische Antriebsmaschine des Kraftfahrzeugs aktiviert wird, sobald das mobile Endgerät auf einem induktiven Ladefeld im Fahrzeuginnenraum des Kraftfahrzeugs angeordnet worden ist, unterhalb welchem sich das weitere NFC-Steuergerät befindet. Der Benutzer kann also ganz genau erkennen, wo er sein mobiles Endgerät im Fahrzeuginnenraum ablegen muss, damit die Zündung des Kraftfahrzeugs automatisch aktiviert und/oder die elektrische Antriebsmaschine des Kraftfahrzeugs automatisch ohne Zutun des Fahrers aktiviert wird. Sein mobiles Endgerät kann über das induktive Ladefeld automatisch aufgeladen werden, wobei das mobile Endgerät in dieser Positionierung automatisch auch nahe genug an dem weiteren NFC-Steuergerät angeordnet ist, sodass es sich im Sende- und Empfangsbereich des weiteren NFC-Steuergeräts befindet. Die NFC-Technik arbeitet in einem Frequenzbereich von 13,56 MHz und bietet eine Datenübertragungsrate von maximal 424 kBit/s bei einer Reichweite von maximal 10 cm. Dies ist bei der erfindungsgemäßen Lösung auch wünschenswert, damit der Benutzer das mobile Endgerät auch bewusst in die Nähe der entsprechenden NFC-Steuergeräte führen muss, damit jeweilige Funktionseinheiten des Kraftfahrzeugs angesteuert werden.

Die erfindungsgemäße Steuervorrichtung zum Betreiben eines Kraftfahrzeugs ist dazu ausgelegt, einen Verriegelungszustand des Schließsystems des Kraftfahrzeugs zu verändern, sobald erfasst wird, dass ein mobiles Endgerät, welches einen NFC-Chip und in einer Speichereinrichtung einen vorgegebenen Code aufweist, in einem Sende- und Empfangsbereich eines im Bereich eines äußeren Türgriffs eines Kraftfahrzeugs integrierten NFC-Steuergeräts angeordnet worden ist. Vorteilhafte Ausgestaltungen des erfindungsgemäßen Verfahrens sind als vorteilhafte Ausgestaltungen der erfindungsgemäßen Steuervorrichtung anzusehen, wobei die Steuervorrichtung insbesondere Mittel zur Durchführung der Verfahrensschritte aufweist.

Das erfindungsgemäße Kraftfahrzeug umfasst die erfindungsgemäße Steuervorrichtung oder eine vorteilhafte Ausführungsform der erfindungsgemäßen Steuervorrichtung.

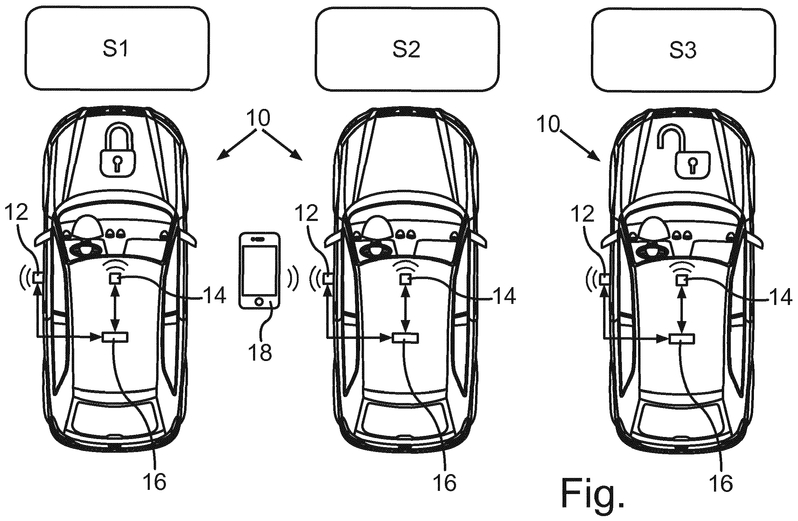

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in der einzigen Figur eine schematische Darstellung eines Kraftfahrzeugs, wobei anhand von drei schematischen Abbildungen des Kraftfahrzeugs verschiedene Fahrzeugzustände und eine Kommunikation zwischen einem Smartphone und dem Kraftfahrzeug dargestellt sind.

Ein Kraftfahrzeug 10 ist in drei verschiedenen Zuständen S1, S2 und S3 schematisch in der einzigen Figur gezeigt. Im Zustand S1 ist das Kraftfahrzeug 10 mittels eines hier nicht näher bezeichneten Schließsystems verriegelt. Das Fahrzeug 10 umfasst im Bereich eines nicht näher bezeichneten äußeren Türgriffs des Kraftfahrzeugs 10 ein erstes NFC-Steuergerät 12. Des Weiteren umfasst das Kraftfahrzeug 10 noch im Fahrzeuginnenraum ein weiteres NFC-Steuergerät 14, welches beispielsweise unterhalb von einem hier nicht näher dargestellten induktiven Ladefeld angeordnet sein kann. Darüber hinaus umfasst das Kraftfahrzeug 10 noch eine Steuervorrichtung 16 zum Betreiben des Kraftfahrzeugs 10. Die Steuervorrichtung 16 ist dabei signaltechnisch mit den beiden NFC-Steuergeräten 12, 14 verbunden. Die Steuervorrichtung 16 ist zudem signaltechnisch mit dem bereits erwähnten Schließsystem des Kraftfahrzeugs 10 verbunden.

Im Fahrzeugzustand S2 erfolgt eine NFC-Kommunikation zwischen einem als Smartphone ausgebildeten mobilen Endgerät 18 und dem im Bereich des äußeren Türgriffs des Kraftfahrzeugs 10 integrierten NFC-Steuergerät 12. Dafür umfasst das mobile Endgerät 18 einen hier nicht näher dargestellten NFC-Chip und in einer Speichereinrichtung, welche hier ebenfalls nicht dargestellt ist, einen vorgegebenen Code.

Ein Benutzer, welcher das Kraftfahrzeug 10 entriegeln möchte, muss lediglich das mobile Endgerät 18 in einen Sende- und Empfangsbereich des NFC-Steuergeräts 12 verbringen, damit die Kommunikation zwischen dem mobilen Endgerät 18 und dem NFC-Steuergerät 12 erfolgen kann. Im Zuge der Kommunikation wird der in der Speichereinrichtung des mobilen Endgeräts 18 hinterlegte Code ausgetauscht. Sobald der Code verifiziert worden ist, wird das zuvor verriegelte Kraftfahrzeug 10 durch eine entsprechende Ansteuerung des Schließsystems mittels der Steuervorrichtung 16 entriegelt, sodass der betreffende Benutzer sich in das Kraftfahrzeug 10 setzen kann, und zwar ohne zuvor einen herkömmlichen Fahrzeugschlüssel betätigen zu müssen. Das Kraftfahrzeug 10 im entriegelten Zustand S3 ist schematisch ganz rechts in der einzigen Figur dargestellt.

Zum Ver- und Entriegeln des Kraftfahrzeugs 10 ist hinaus ist es nicht erforderlich, dass der Benutzer seine Hand beispielsweise an einen Türgriff des Kraftfahrzeugs 10 legt, um die Kommunikation zwischen dem NFC-Chip des mobilen Endgeräts 18 und dem im Bereich des äußeren Türgriffs des Kraftfahrzeugs 10 integrierten NFC-Steuergeräts 12 zu aktivieren. Er muss lediglich das mobile Endgerät 18 nahe genug an das NFC-Steuergerät 12, insbesondere näher als 10 cm heranführen, um die Kommunikation zwischen dem NFC-Chip des mobilen Endgeräts 18 und des NFC-Steuergeräts 12 zu ermöglichen.

Darüber hinaus ist es auch möglich, dass der Zustand von weiteren Funktionseinheiten des Kraftfahrzeugs 10, wie beispielsweise einem Navigationssystem, einer Kofferraumklappe oder dergleichen, entsprechend einer im mobilen Endgerät 18 vorkonfigurierten Auswahl verändert wird, sobald erfasst wird, dass das mobile Endgerät 18 in den Sende- und Empfangsbereich des im Bereich des äußeren Türgriffs des Kraftfahrzeugs 10 integrierten NFC-Steuergeräts 12 angeordnet worden ist. Ein Benutzer kann beispielsweise über eine auf dem mobilen Endgerät 18 installierte App verschiedenste Funktionseinheiten des Kraftfahrzeugs 10 nach seinen Wünschen vorkonfigurieren. So kann der Benutzer beispielsweise bestimmen, dass das Navigationssystem des Kraftfahrzeugs schon aktiviert und hochgefahren wird, sobald eine erfolgreiche Authentifizierung mittels des mobilen Endgeräts 18, also durch eine entsprechende Kommunikation zwischen dem im mobilen Endgerät 18 integrierten NFC-Chip und dem NFC-Steuergerät 12, erfolgt ist. Genauso gut kann der Benutzer beispielsweise auch vorkonfigurieren, dass automatisch eine Kofferraumklappe des Kraftfahrzeugs 10 geöffnet werden soll, wann immer das Kraftfahrzeug 10 entriegelt wird. Alle möglichen weiteren Vorkonfigurationen im Hinblick auf verschiedenste Funktionseinheiten des Kraftfahrzeugs 10 sind ebenfalls denkbar.

Darüber hinaus ist es auch möglich, dass eine Zündung des Kraftfahrzeugs 10 automatisch aktiviert wird, also der Zustand Klemme 15 An hergestellt wird, sobald erfasst wird, dass das mobile Endgerät 18 in einen Sende- und Empfangsbereich des im Fahrzeuginnenraum des Kraftfahrzeugs 10 integrierten weiteren NFC-Steuergeräts 14 angeordnet worden ist. Dabei kann es vorgesehen sein, dass das weitere NFC-Steuergerät 14, wie bereits erwähnt, beispielsweise unterhalb von einem hier nicht dargestellten induktiven Ladefeld angeordnet ist. Der Benutzer muss sein mobiles Endgerät 18 also lediglich auf das induktive Ladefeld ablegen, um eine Kommunikation zwischen dem NFC-Chip des mobilen Endgeräts 18 und dem weiteren NFC-Steuergerät 14 zu initiieren.

Da es sich bei dem Kraftfahrzeug 10 um ein Hybridfahrzeug oder auch um ein reines Elektrofahrzeug handelt, ist es vorgesehen, dass eine elektrische Antriebsmaschine des Kraftfahrzeugs 10 aktiviert wird, sobald das mobile Endgerät 18 auf dem induktiven Ladefeld abgelegt worden ist und somit eine Kommunikation zwischen dem NFC-Chip des mobilen Endgeräts 18 und dem weiteren NFC-Steuergerät 14 ermöglicht wird.

## Patentansprüche

1. Verfahren zum Betreiben eines Kraftfahrzeugs (10), bei welchem ein Verriegelungszustand (S1, S3) eines Schließsystems des Kraftfahrzeugs (10) verändert wird, sobald erfasst wird, dass ein mobiles Endgerät (18), welches einen NFC-Chip und in einer Speichereinrichtung einen vorgegebenen Code aufweist, in einem Sende- und Empfangsbereich eines im Kraftfahrzeug (10) integrierten NFC-Steuergeräts angeordnet wird, und sobald das mobile Endgerät (18) in einem Sende- und Empfangsbereich eines im Fahrzeugsinnenraum des Kraftfahrzeugs (10) integrierten weiteren NFC-Steuergeräts (14) angeordnet wird, eine Zündung des Kraftfahrzeugs (10) aktiviert wird,
**dadurch gekennzeichnet, dass**
sobald das mobile Endgerät (18) in dem Sende- und Empfangsbereich des weiteren NFC-Steuergeräts (14) angeordnet wird, eine elektrische Antriebsmaschine des Kraftfahrzeugs (10) aktiviert wird, ohne dass ein Fahrer des Kraftfahrzeugs einen Startknopf betätigen muss.

2. Verfahren nach Anspruch 1,
**dadurch gekennzeichnet, dass**
ein Zustand von zumindest einer weiteren Funktionseinheit des Kraftfahrzeugs (10) entsprechend einer im mobilen Endgerät (18) vorkonfigurierten Auswahl verändert wird, sobald erfasst wird, dass das mobile Endgerät (18) in den Sende- und Empfangsbereich des NFC-Steuergeräts (12) angeordnet wird.

3. Verfahren nach einem der vorhergehenden Ansprüche,
**dadurch gekennzeichnet, dass**
die Zündung des Kraftfahrzeugs (10) aktiviert und/oder die elektrische Antriebsmaschine des Kraftfahrzeugs (10) aktiviert wird, sobald das mobile Endgerät (18) auf einem induktiven Ladefeld im Fahrzeuginnenraum des Kraftfahrzeugs (10) angeordnet worden ist, unter welchem sich das weitere NFC-Steuergerät (14) befindet.

4. Steuervorrichtung (16) zum Betreiben eines Kraftfahrzeugs (10), welche dazu ausgelegt ist, einen Verriegelungszustand eines Schließsystems des Kraftfahrzeugs (10) zu verändern, sobald erfasst wird, dass ein mobiles Endgerät (18), welches einen NFC-Chip und in einer Speichereinrichtung einen vorgegebenen Code aufweist, in einem Sende- und Empfangsbereich eines im Kraftfahrzeug (10) integrierten NFC-Steuergeräts (12) angeordnet worden ist, wobei die Steuervorrichtung (16) dazu ausgelegt ist, eine Zündung des Kraftfahrzeugs (10) zu aktivieren, sobald das mobile Endgerät (18) in einem Sende- und Empfangsbereich eines im Fahrzeugsinnenraum des Kraftfahrzeugs (10) integrierten weiteren NFC-Steuergeräts (14) angeordnet wird,
**dadurch gekennzeichnet, dass**
die Steuervorrichtung (16) dazu ausgelegt ist, eine elektrische Antriebsmaschine des Kraftfahrzeugs (10) zu aktivieren, ohne dass ein Fahrer des Kraftfahrzeugs einen Startknopf betätigen muss, sobald das mobile Endgerät (18) in dem Sende- und Empfangsbereich des weiteren NFC-Steuergeräts (14) angeordnet wird.

5. Kraftfahrzeug (10) mit einer Steuervorrichtung (16) nach Anspruch 4.

## Claims

1. Method for operating a motor vehicle (10), in which a locking state (S1, S3) of a locking system of the motor vehicle (10) is changed as soon as it is detected that a mobile terminal device (18) that has an NFC chip and a preset code in a memory unit is located within a transmitting and receiving area of an NFC control device integrated in the motor vehicle (10), and as soon as the mobile terminal device (18) is located within a transmitting and receiving area of an additional NFC control device (14) integrated in a vehicle interior of the motor vehicle (10), an ignition of the motor vehicle (10) is activated,
**characterised in that**
as soon as the mobile terminal device (18) is located within the transmitting and receiving area of the additional NFC control device (14), an electric drive motor of the motor vehicle (10) is activated without a driver of the motor vehicle needing to press a start button.

2. Method according to claim 1,
**characterised in that**
a state of at least one additional functional unit of the motor vehicle (10) is changed according to a selection preconfigured in the mobile terminal device (18) as soon as it is detected that the mobile terminal device (18) is located within the transmitting and receiving area of the NFC control device (12).

3. Method according to any of the preceding claims,
**characterised in that**
the ignition of the motor vehicle (10) is activated and/or the electric drive motor of the motor vehicle (10) is activated as soon as the mobile terminal device (18) has been placed on an inductive charging field in the vehicle interior of the motor vehicle (10), beneath which the additional NFC control device (14) is located.

4. Control device (16) for operating a motor vehicle (10), which is designed to change a locking state of a locking system of the motor vehicle (10) as soon as it is detected that a mobile terminal device (18) that has an NFC chip and a preset code in a memory unit is located within a transmitting and receiving area of an NFC control device (12) integrated in the motor vehicle (10), wherein the control device (16) designed to activate an ignition of the motor vehicle (10) as soon as the mobile terminal device (18) is located within a transmitting and receiving area of an additional NFC control device (14) integrated in the vehicle interior of the motor vehicle (10),
**characterised in that**
the control device (16) is designed to activate an electric drive motor of the motor vehicle (10) without a driver of the motor vehicle needing to press a start button as soon as the mobile terminal device (18) is located within the transmitting and receiving area of the additional NFC control device (14).

5. Motor vehicle (10) having a control device (16) according to claim 4.

## Revendications

1. Procédé de fonctionnement d'un véhicule automobile (10), dans lequel un état de verrouillage (S1, S3) d'un système de fermeture du véhicule automobile (10) est modifié dès qu'il est détecté qu'un terminal mobile (18), présentant une puce NFC et un code prédéterminé au sein d'un dispositif de mémoire, se trouve dans une zone d'émission et de réception d'un appareil de commande NFC intégré dans le véhicule automobile (10), et
dès que le terminal mobile (18) se trouve dans une zone d'émission et de réception d'un autre appareil de commande NFC (14) intégré à l'intérieur du véhicule automobile (10), un allumage du véhicule automobile (10) est activé,
**caractérisé en ce que**
dès que le terminal mobile (18) se trouve dans la zone d'émission et de réception de l'autre appareil de commande NFC (14), une machine d'entraînement électrique du véhicule automobile (10) est activée sans qu'un conducteur du véhicule automobile doive actionner un bouton de démarrage.

2. Procédé selon la revendication 1,
**caractérisé en ce que**
l'état d'au moins une autre unité fonctionnelle du véhicule automobile (10) est modifié conformément à une sélection préconfigurée dans le terminal mobile (18) dès qu'il est détecté que le terminal mobile (18) se trouve dans la zone d'émission et de réception de l'appareil de commande NFC (12).

3. Procédé selon l'une quelconque des revendications précédentes, **caractérisé en ce que**
l'allumage du véhicule automobile (10) est activé et/ou la machine d'entraînement électrique du véhicule automobile (10) est activée dès que le terminal mobile (18) est placé à l'intérieur du véhicule automobile (10) sur un champ de charge inductif sous lequel se trouve l'autre appareil de commande NFC (14).

4. Dispositif de commande (16) destiné au fonctionnement d'un véhicule automobile (10) et conçu pour modifier un état de verrouillage d'un système de fermeture du véhicule automobile (10) dès qu'il est détecté qu'un terminal mobile (18), présentant une puce NFC et un code prédéterminé au sein d'un dispositif de mémoire, a été placé dans une zone d'émission et de réception d'un appareil de commande NFC (12) intégré dans le véhicule automobile (10), dans lequel le dispositif de commande (16) est conçu pour activer un allumage du véhicule automobile (10) dès que le terminal mobile (18) se trouve dans une zone d'émission et de réception d'un autre appareil de commande NFC (14) intégré à l'intérieur du véhicule automobile (10),
**caractérisé en ce que**
le dispositif de commande (16) est conçu pour activer une machine d'entraînement électrique du véhicule automobile (10) sans qu'un conducteur du véhicule automobile doive actionner un bouton de démarrage, dès que le terminal mobile (18) se trouve dans la zone d'émission et de réception de l'autre appareil de commande NFC (14).

5. Véhicule automobile (10) avec un dispositif de commande (16) selon la revendication 4.
